# EUROPÄISCHE PATENTSCHRIFT

(11) **EP 0 845 018 B1**
(45) Veröffentlichungstag und Bekanntmachung des Hinweises auf die Patenterteilung: **03.11.1999**
(21) Anmeldenummer: 96928409.0
(22) Anmeldetag: 05.08.1996
(51) Int. Cl.: C09K 5/00, C09K 3/18

(54) **VERWENDUNG VON POLYMEREN MIT WIEDERKEHRENDEN SUCCINYLEINHEITEN ALS FROSTSCHUTZMITTEL**
USE AS ANTIFREEZE OF POLYMERS WITH RECURRING SUCCINYL UNITS
UTILISATION COMME ANTIGELS DE POLYMERES COMPORTANT DES UNITES SUCCINYLE RECURRENTES

(30) Priorität: 17.08.1995 DE 19530203
(43) Veröffentlichungstag der Anmeldung: 03.06.1998
(73) Patentinhaber: BAYER AG, 51368 Leverkusen (DE)
(72) Erfinder: HEUER, Lutz, D-47800 Krefeld (DE); JOENTGEN, Winfried, D-51067 Köln (DE); GROTH, Torsten, D-51061 Köln (DE); MORITZ, Ralf-Johann, D-41469 Neuss (DE)
(86) Internationale Anmeldenummer: EP9603437
(87) Internationale Veröffentlichungsnummer: WO9707178

(56) Entgegenhaltungen:
- EP-A- 0 593 187
- EP-A- 0 650 995
- DE-A- 4 034 217

## Beschreibung

Die Erfindung betrifft die Verwendung von Polymeren mit wiederkehrenden Succinyleinheiten als Frostschutzmittel sowie entsprechende Frostschutzmittel.

Frostschutzmittel sind seit langem bekannt und wirken durch ihre in Wasser beobachtete Gefrierpunktserniedrigung. Glykol findet weithin Verwendung. Es wird jedoch von Stoffen, die in metallgemantelten Kühlern oder anderen vor dem Frieren von Wasser zu schützenden technischen Einrichtungen enthalten sind, verlangt, daß sie antikorrosive Eigenschaften haben und, da sie oft in die Umwelt entlassen werden, daß sie biologisch abbaubar sind (Römpp, Thieme, 1993, S. 1502).

Die Herstellung und Verwendung von Polyasparaginsäure (PAA) und ihrer Derivate ist seit langem Gegenstand zahlreicher Veröffentlichungen und Patente.

Die Herstellung kann durch thermische Polykondensation von Asparaginsäure It. J. Org. Chem. 26, 1084 (1961) erfolgen. Es tritt als Zwischenstufe zunächst das Polysuccinimid (PSI) auf, welches dort als "Anhydropolyasparaginsäure" bezeichnet wird. Durch Hydrolyse kann PSI in PAA überführt werden.

US-A 4 839 461 (= EP-A 0 256 366) beschreibt die Herstellung von Polyasparaginsäure aus Maleinsäureanhydrid, Wasser und Ammoniak.

In DE-A 2 253 190 wird ein Verfahren zur Herstellung von Polyaminosäure-Derivaten, speziell Polyasparaginsäure-Derivaten, beschrieben. Danach werden neben Asparaginsäure auch Maleinsäure-Derivate (Monoammoniumsalz und Monoamid) zur Zwischenstufe PSI thermisch polymerisiert, welche anschließend in geeigneten Lösungsmitteln mit Aminen zu den gewünschen Polyaminosäure-Derivaten umgesetzt werden können.

US-A 5 296 578 beschreibt die Herstellung von PSI aus Maleinsäureanhydrid, Wasser und Ammoniak. Hierbei wird die Masse in mehreren Stunden über hochviskose Phasenzustände hinweg zum festen PSI umgesetzt und anschließend zu PAA hydrolysiert.

US-A 5 288 783 beschreibt die Herstellung von PAA aus Maleinsäure oder Fumarsäure, Wasser und Ammoniak. Maleinsäureanhydrid wird mit Wasser im Rührkessel vermischt und unter Kühlen zu Maleinsäure umgesetzt. Durch Zugabe von konzentrierter Ammoniaklösung wird das Maleinsäuremonoammoniumsalz hergestellt. Anschließend wird das enthaltene Wasser verdampft und das trockene Monoammoniumsalz bei Temperaturen von 190 bis 350°C polymerisiert. Alternativ wird vorgeschlagen, das in wäßriger Lösung vorliegende Monoammoniumsalz bei Temperaturen von 160 bis 200°C durch Extrusion zu PSI weiter zu verarbeiten. Das auf einem der beiden Verfahrenswege hergestellte PSI wird anschl. alkalisch zu PAA hydrolysiert.

EP-A 593 187 beschreibt die Herstellung von PSI durch thermische Polymerisation von Maleinamidsäure bei Temperaturen von 160 bis 330°C bei einer Reaktionsdauer von 2 Minuten bis 6 Stunden. Es wird auch auf die Polykondensation im Lösumgsmittel unter Verwendung von Kondensationshilfsmitteln hingewiesen.

DE-A 4 221 875 beschreibt die Herstellung von modifizierten Polyasparaginsäuren durch Polykondensation und ihre Verwendung als Zusätze für Waschmittel, Reinigungsmittel, Wasserbehandlungsmittel und Belagsverhinderer beim Eindampfen von Zuckern.

DE-A 4 300 020 betrifft ein Verfahren zur Herstellung von Polymerisaten der Asparaginsäure durch Umsetzung von Maleinsäureanhydrid und Ammoniak oder Aminen und die Verwendung der Polymerisate als Scale-Inhibitor, als Dispergiermittel und als Additiv zu Wasch- und Reinigungsmitteln.

DE-A 4 307 114 betrifft ein Verfahren zur Herstellung von Umsetzungsprodukten aus Polyasparaginsäureimiden und Aminosäuren und Verwendung der Umsetzungsprodukte als Zusatz zu Wasch- und Reinigungsmitteln, als Scale-Inhibitor und als Dispergiermittel.

DE-A 4 310 995 betrifft die Verwendung von Polyasparaginsäuren in Reinigungsformulierungen, DE-A 4 311 237 die Verwendung in Kettengleitmitteln.

Der vorliegenden Erfindung liegt die Aufgabe zugrunde, verbesserte Frostschutzmittel zur Verfügung zu stellen.

Die vorliegende Erfindung betrifft die Verwendung von Polymeren mit wiederkehrenden Succinyleinheiten, insbesondere von Polyasparaginsäuren als Frostschutzmittel.

Die erfindungsgemäß verwendeten Polymere weisen wiederkehrende SuccinylEinheiten mit einer der folgenden Strukturen auf: 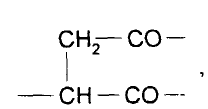 bevorzugt

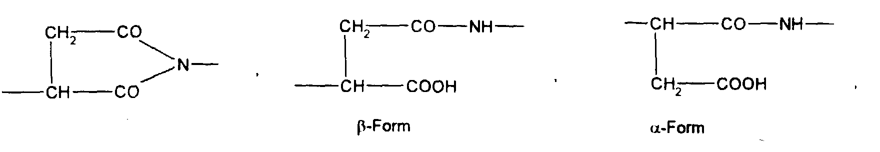

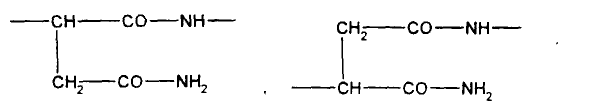

Zusätzlich können durch geeignete Reaktionsführung und Wahl der Edukte weitere wiederkehrende Einheiten enthalten sein, z. B.
a) Äpfelsäure-Einheiten der Formel 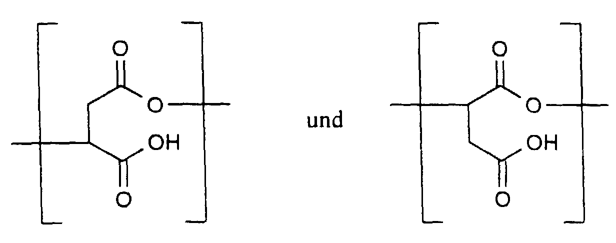
b) Maleinsäure- und Fumarsäure-Einheiten der Formel

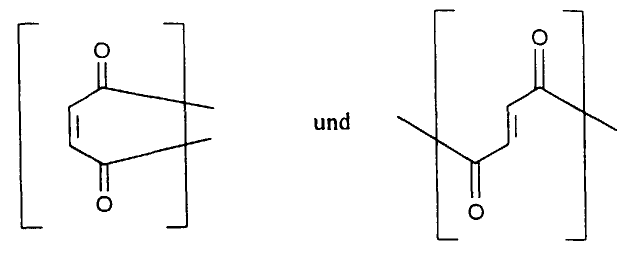

Die Analyse der chemischen Struktur erfolgt vorzugsweise mit ¹³C-NMR, FT-IR und nach Totalhydrolyse mit HPLC, GC und GC/MS.

Bei vielen Herstellungsverfahren fallen nicht die reinen Säuren sondern zunächst die entsprechenden Anhydride, beispielsweise Polysuccinimid an. Derartige Polymerisationsprodukte können durch Umsetzung mit einer Base gegebenenfalls in Gegenwart von Wasser in ein PAA-haltiges Salz überführt werden. Diese Umwandlung von PSI-haltigen in PAA-haltige Polymere geschieht anschließend in einer geeigneten Vorrichtung durch Hydrolyse. Bevorzugt ist dabei ein pH-Wert zwischen 5 und 14 geeignet. In besonders bevorzugter Form wird ein pH-Wert von 7 bis 12 gewählt, insbesondere durch den Zusatz einer Base. Geeignete Basen sind Alkali- und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc.. Besonders bevorzugt sind neben freien Säuren deren Na-, K- oder Ca-Salze.

Die Temperatur bei der Hydrolyse liegt geeigneter Weise in einem Bereich einschließlich bis zum Siedepunkt der PSI-Suspension und bevorzugt bei 20 bis 150°C. Die Hydrolyse wird gegebenenfalls unter Druck durchgeführt.

Es ist jedoch auch möglich, durch rein wäßrige Hydrolyse oder Behandlung des Salzes mit Säuren oder sauren Ionenaustauschern die freie Polyasparaginsäure zu erhalten. Der Begriff "Polyasparaginsäure" (= PAA) umfaßt bei der vorliegenden Erfindung ebenfalls die Salze, falls nicht ausdrücklich anders dargestellt. Das fertige Produkt wird durch Trocknung, bevorzugt Sprühtrocknung, erhalten.

Bevorzugte Polymere haben ein Molekulargewicht nach gelpermeations-chromatographischen Analysen (von Mw = 500 bis 10.000, bevorzugt 700 bis 5.000, besonders bevorzugt 1.000 bis 4.500). Im allgemeinen liegt der Anteil der beta-Form bei mehr als 50 %, bevorzugt bei mehr als 70 %.

In einer bevorzugten Form handelt es sich bei den erfindungsgemäß zu verwendenden Polymeren um modifizierte Polyasparaginsäuren, die man durch Umsetzung von
a) 0,1 - 99,9 Mol-% PAA oder PSI oder 0,1 - 99,9 Mol-% Asparaginsäure mit
b) 99,9 - 0,1 Mol-%
an Fettsäuren, Fettsäureamiden, mehrbasischen Carbonsäuren, deren Anhydriden und Amiden, mehrbasischen Hydroxycarbonsäuren, deren Anhydriden und Amiden, Polyhydroxycarbonsäuren, Aminocarbonsäuren, Zuckercarbonsäuren, Alkoholen, Polyolen, Aminen, Polyaminen, alkoxylierten Alkoholen und Aminen, Aminoalkoholen, Aminozuckern, Kohlehydraten, ethylenisch ungesättigten Mono- und Polycarbonsäuren sowie deren Anhydriden und Amiden, Proteinhydrolysaten z.B. Mais-Proteinhydrolysat, Soja-Proteinhydrolysat, Aminosulfonsäuren und Aminophosphonsäuren nach dem oben beschriebenen erfindungsgemäßen Verfahren zur Reaktion bringt.

Die unter a) beschriebenen Edukte werden in der erfindungsgemäßen Polymerisation zu 0,1 bis 99,9 Mol-%, vorzugsweise zu 60 bis 99,9 Mol-% und besonders bevorzugt zu 75 bis 99,9 Mol-% eingesetzt.

Als Komponente (b) der Polymerisate kommen sämtliche Fettsäuren in Betracht. Sie können gesättigt oder ethylenisch ungesättigt sein. Beispiele sind Ameisensäure, Essigsäure, Propionsäure, Buttersäure, Laurinsäure, Palmitinsäure, Stearinsäure, Ölsäure, Linolsäure, Linolensäure, Sorbinsäure, Myristinsäure, Undecansäure sowie alle natürlich vorkommenden Fettsäuregemische, beispielsweise C₁₂/C₁₄-oder C₁₆/C₁₈-Fettsäuremischungen. Als ungesättigte Fettsäuren können auch Acrylsäure und Methacrylsäure eingesetzt werden.

Weiterhin können diese Säuren auch in Form ihrer Amide verwendet werden Als mehrbasische Carbonsäuren können beispielweise Oxalsäure, Bernsteinsäure, Glutarsäure, Adipinsäure, Malonsäure, Korksäure, Aconitsäure, Itaconsäure, Sulfobernsteinsäure, Alkenylbernsteinsäuren (C₁-C₂₆), 1,2,3,-Propantricarbonsäure, Butantetracarbonsäure, Furandicarbonsäure, Pyridindicarbonsäure eingesetzt werden. Ebenfalls können die Anhydride von mehrbasischen Carbonsäuren z.B. Bernsteinsäureanhydrid, Itaconsäureanhydrid, Aconitsäure-anhydrid und Phtalsäureanhydrid verwendet werden. Weiter kommen als Komponente (b) auch mehrbasische Hydroxycarbonsäuren und Polyhydroxycarbonsäuren in Betracht. Mehrbasische Hydroxycarbonsäuren tragen neben mindestens einer Hydroxygruppe mindestens zwei oder mehr Carboxylgruppen. Als Beispiele sind hier Äpfelsäure, Weinsäure, Traubensäure, Citronensäure und Isocitronensäure genannt.

Eirbasische Polyhydroxycarbonsäuren tragen neben einer Carbonsäuregruppe zwei oder mehr Hydroxygruppen, z.B. Glycerinsäure, Dimethylolpropionsäure, Dimethylolbuttersäure, Gluconsäure. Außerdem sind einwertige Alkohole mit beispielsweise 1 bis 22 C-Atomen wie z.B. Methanol, Ethanol, n-Propanol, i-Propanol, Butanol, Pentanol, Hexanol, Octanol, Laurylakohol, Stearylalkohol etc. geeignet. Die Alkohole können auch gegebenenfalls eine Doppelbindung aufweisen, wie Allylalkohol oder Oleylalkohol. Weiterhin können diese Alkohole alkoxiliert sein, beispielsweise mit Ethylenoxid oder Propylenoxid. Von technischem Interesse sind vor allem die Addukte von 3 bis 50 Mol Ethylenoxid an Fettalkohole oder Oxoalkohole. Weiterhin können als Komponente (b) Polyole entweder gesättigt oder ungesättigt eingesetzt werden wie z.B. Ethylenglykol, Propylenglykol, Butandiol, Butendiol, Glycerin, Trimethylolpropan, Pentaerythrit, Sorbit, Neopentylglykol sowie alkoxilierte Polyole wie Polyethylenglykole, Polypropylenglykole, ethoxiliertes Trimethylolpropan, Glycerin oder Pentaerythrit mit Molekulargewichten bis zu 6000 eingesetzt werden. Des Weiteren eignen sich als Comonomer (b) auch Amine wie C₁-C₂₂-Alkylamine, z.B. Methylamin, Ethylamin, Propylamin, Butylamin, Cyclohexylamin, Octylamin, Isooctylamin (Ethylhexylamin), Stearylamin, Allylamin, Oleylamin, Ethylendiamin, Diethylentriamin, Hexamethylendiamin, Piperazin, Diaminobutan, Dimethylamin, Diethylamin, Hydroxylamin, Hydrazin, Ethanolamin, Diethanolamin, Aminopropandiol, sowie Polyalkylenaminen wie Polyethylenamin mit Molekulargewichten bis 6000. Die Amine können auch alkoxiliert sein, z.B. die Anlagerungsprodukte von 3 bis 30 Mol Ethylenoxid an Fettamine wie Oleylamin, Palmitylamin, oder Stearylamin. Weiterhin sind auch Aminozucker wie Aminosorbit oder Chitosamin geeignet. Außerdem sind als Komponente (b) Kohlenhydrate wie Glucose, Saccharose, Maltose, Dextrine, Stärke oder Zuckercarbonsäuren, beispielsweise Schleimsäure, Gluconsäure, Glucuronsäure, Glucarsäure. Außerdem können Aminosäuren, proteinogene wie Glycin, Alanin, Glutaminsäure und Lysin oder nicht proteinogene wie 4-Aminobuttersäure, Taurin, Diaminobernsteinsäure, 11-Aminoundecansäure und 6-Aminocapronsäure als Komponente (b) eingesetzt werden. Die Verbindungen der Komponente (b) werden in Mengen von 0,1 bis 99,9 Mol-%, vorzugsweise 0,1 bis 40 Mol-%, besonders bevorzugt 0,1 bis 25 Mol-% zur Polymerisation eingesetzt. Man kann eine einzige Verbindung der Komponente (b) oder Mischungen aus zwei oder mehreren Verbindungen von (b) einsetzen.

Werden als Komponente (b) monofunktionelle Verbindungen wie Alkohole, Amine, Fettsäuren oder Fettsäureamide verwendet, so werden sie am Kettenende eingebaut. Sie wirken als Kettenabbrecher und erniedrigen das Molekulargewicht. Mehrfunktionelle Verbindungen der Komponente (b) können im fertigen Polymer sowohl am Kettenende als auch statistisch verteilt über die Polymerkette eingebaut sein.

Die Rohpolymerisate können durch übliche Aufarbeitungsmethoden beispielsweise durch Extraktion mit Wasser und 1-N-Salzsäure oder durch Membranfiltration von monomeren Anteilen befreit werden. Die Analyse der Copolymere erfolgt durch ¹³C- und ¹⁵N-NMR-Spektroskopie, FT-IR-Spektroskopie und nach Totalhydrolyse mit HPLC, GC und GC-MS. Bei der erfindungsgemäßen Polymerisation fällt das Polymerisat primär in Form der zumeist wasserunlöslichen modifizierten Polysuccinimide an.

Die modifizierten Polyasparaginsäuren werden aus den Polysuccinimiden vorzugsweise durch wässrige Hydrolyse bei 20°C - 150°C und pH 7 - 12, gegebenenfalls unter Druck hergestellt. Diese Reaktion läßt sich jedoch auch bei Temperaturen außerhalb des angegebenen Temperaturbereichs und bei anderen pH-Werten durchführen. Geeignete Basen sind Alkali und Erdalkalihydroxide oder Carbonate wie beispielsweise Natronlauge, Kalilauge, Soda oder Kaliumcarbonat, Ammoniak und Amine wie Triethylamin, Triethanolamin, Diethylamin, Diethanolamin, Alkylamine etc.. Man erhält teilweise oder vollständig neutralisierte Copolymerisate, die 0,1 bis 99,9 Mol-% Succinyleinheiten und 99,9 bis 0,1 Mol-% von mindestens einer Verbindung (b) einpolymerisiert enthalten.

Die erfindungsgemäß zu verwendenden Polymere, insbesondere Polyasparaginsäuren können als Frostschutzmittel mit anderen bekannten Hilfsstoffen eingesetzt werden, z.B. mit Ethylenglykol, Propylenglykol, Phosphate wie Natrium- oder Kaliumphosphate (NaₓHₓPO4, x = 0-3), Polyphosphate wie Natriumtriphosphat, Borax, Sorbit, Natriumlactat, Glycerin, 2-Propanol, Ethanol, Methanol, Molybdate, Chromate, Silikate, Zinksalze, Natriummetasilikate, Benzoate, Phosphonate wie Aminomethylenphosphonat, aromatische Azole wie Mercaptobenzthiazol, Benztriazol, 4-Methylbenztriazol, 5-Methylbenztriazol oder Mischungen aus 4-/5-Methylbenztriazol, 4-/5-Alkylbenztriazole wie 4-Butylbenztriazol, Benzimidazolderivate, Polyacrylate, Polymethacrylate, Polymaleate, Copolymere auf Basis von Acryl-, Methacryl- oder Maleinsäure, Ligninsulfonate, Taurine, Säuren wie Zitronensäure, Weinsäure, Gluconsäure, EDTA, Phenylaminoessigsäuresalze des Kaliums oder Natriums, Triethanolamin, Glykokoll, Alanin, Isatinsäure und Nitriten.

Bevorzugte Frostschutzmittel enthalten:
1 bis 95 Gew.-Teile der erfindungsgemäß zu verwendenden Polymere, insbesondere Polyasparaginsäure
0 bis 90 Gew.-Teile Ethylenglykol, Propylenglykol oder einem Gemisch von beidem
0 bis 40 Gew.-Teile Wasser.

Die Erfindung betrifft weiterhin Frostschutzmittel enthaltend Polymere mit wiederkehrenden Succinyleinheiten, insbesondere Polyasparaginsäuren. Die erfindungsgemäßen Frostschutzmittel eignen sich insbesondere für den Einsatz in Kühlwässern, beispielsweise für Automotoren.

Sie eignen sich weiterhin für den Einsatz in Enteisungsflüssigkeiten, beispielsweise zum Enteisen von Flugzeugen oder Start- und Landebahnen. Außerdem können sie in Frostschutzmitteln in Scheibenwaschanlagen von Fahrzeugen eingesetzt werden Ebenso können die erfindungsgemäßen Polymere alleine oder in Kombination mit Steingranulaten wie beispielsweise Split als biologisch abbaubare und nicht korrosiv wirkende Ersatzstoffe für Streusalze dienen.

### Beispiele

### Beispiel 1

### Herstellung von Polysuccinimid aus Maleinamidsäure

16 kg Maleinamidsäure (139,1 Mol), Schmelzpunkt 166°C, wurden kontinuierlich mit einer Dosierrate von 7 kg/h über eine Förderschnecke in den Mischungsteil der auf 172 - 174°C geheitzten Schnecke gebracht. In der Mischungszone wird auf der heißen Oberfläche der Schneckenwellen sofort ein dünner Schmelzfilm gebildet, der unter Entweichen von Reaktionswasser polymerisiert. Im weiten Verlauf der Schnecke wurde das Polymer vollständig getrocknet und verließ die Schnecke als grobkörnige bis pulverige Masse. Man erhält 12 660 g Produkt, das durch folgende Analysen charakterisiert wird (Tabelle 1).

### Beispiel 2

### Herstellung von Polysuccinimid aus Maleinsäuremonoammoniumsalz

Der in Beispiel 1 beschriebene Versuch wurde mit Maleinsäuremonoammoniumsalz als Edukt wiederholt. 5 kg Maleinsäureammoniumsalz (37,6 Mol) (Schmelzpunkt 171°C) wurde mit eine Dosierrate von 5 kg/h der auf 174 -176°C erhitzten Schnecke zugeführt. Als Produkt wurden 3542 g einer grobkörnigen bis pulvrigen Masse erhalten (Analytik s. Tabelle 1).

### Beispiel 3

### Herstellung von Polysuccinimid aus einer wäßrigen Maleinsäuremonoammoniumsalzlösung

6800 g 25 %ige Ammoniaklösung (100 Mol) werden bei 60°C in einer Stunde zu einer Mischung von 9 800 g (100 Mol) Maleinsäureanhydrid und 2 825 g Wasser gegeben. Man erhält eine Suspension des Monoammoniumsalzes der Maleinsäure in Wasser. Diese Suspension geht bei Temperaturen über 70°C in eine homogene Lösung über, die einen Feststoffgehalt von ca. 69,5 % hat. Diese ca. 75°C heiße Lösung wird mit einer Geschwindigkeit von 3 kg/h in den Mischungsteil der auf 152 - 154°C erhitzten Schnecke eindosiert. Im Mischungsteil findet sofort ein Ausdampfen des Lösungswassers statt und es bildet sich kurzzeitig das trockene Ammoniumsalz, welches jedoch in der gesättigten Wasserdampfatmosphäre innerhalb der Schnecke wieder angelöst wird. Dieser Vorgang führt zur Bildung einer Mischphase aus hochkonzentrierter Lösung und Schmelze. Dieser Effekt ermöglicht die Bildung des charakteristischen Schmelzfilmes schon bei einer Temperatur von 148 - 152°C (gemessen in der Schmelze), die deutlich unter der Schmelztemperatur (171°C) des reinen Salzes liegt. Im weiteren Verlauf der Schnecke wird dann das Lösungs- und Reaktionswassers vollständig entfernt und man erhielt wiederum 9130 g eines grobkörnigen bis pulverigen Produktes (Analytik s. Tabelle 1).

**Tabelle 1**

| Beispiele | 1 | 2 | 3 |
|---|---|---|---|
| Elementarzusammensetzung: | | | |
| C [Gew.-%] | 46,6 | 46,6 | 45,0 |
| H [Gew.-%] | 4,0 | 3,7 | 4,0 |
| N [Gew.-%] | 14,1 | 13,3 | 13,5 |
| NH₄ [Gew.-%] | 1,5 | 0,7 | 1,1 |
| H₂O [Gew.-%] | 0,3 | 0,3 | 0,4 |
| Molmassenverteilung mit GPC¹⁾: | | | |
| Mw | 2608 | 3050 | 3350 |
| Verseifungszahl (mg NaOH/g) | 397 | 401 | 426 |

| | | | |
|---|---|---|---|
| 1) nach Uberführung ins Natriumsalz | | | |

Die Wirkung gegen Eisbildung (Frostschutzmittel) wurde durch klassische Messung der Gefrierpunktserniedrigung festgestellt.

### Anwendungsbeispiel 1

### Gefrierpunktserniedrigung in wäßrigen Systemen:

Folgende wäßrige Systeme wurden unter Verwendung der in den Herstellungsbeispielen angegebenen Polyasparaginsäuren hergestellt:
System 1: Polyasparaginsäure aus Beispiel 1 in den im folgenden angegebenen Konzentrationen:
   0, 5, 10, 15, 20, 25, 30, 35 und 40 Gew.-%, jeweils aufgefüllt auf 100 % mit destilliertem Wasser.
System 2: Polyasparaginsäure aus Beispiel 2 in den im folgenden angegebenen Konzentrationen.
   0, 5, 10, 15, 20, 25, 30, 35 und 40 Gew.-%, jeweils aufgefüllt auf 100 % mit destilliertem Wasser.

### Vergleichsbeispiel

Unter Verwendung von Ethylenglykol in den folgenden Konzentrationen:
0, 5, 10, 15, 20, 25, 30, 35, und 40 Gew.-%, jeweils aufgefüllt auf 100 % mit destilliertem Wasser.

Mit diesen Systemen wurden durch Messung der Gefrierpunktserniedrigung der Schutz gegen Eisbildung festgestellt. Als Kriterium wurde dabei die Gefrierpunktserniedrigung gegenüber Wasser angenommen. Folgende Werte wurden erhalten:

**Tabelle**

| | Temperatur (°C) | | |
|---|---|---|---|
| Einsatz (Gew.-%) | System 1 | System 2 | Vergleich |
| 0 | 0 | 0 | 0 |
| 5 | -0,8 | -0,8 | -0,7 |
| 10 | -1,8 | -1,8 | -4 |
| 15 | -5,4 | -5,8 | -7 |
| 20 | -8,8 | -9,8 | -9 |
| 25 | -12 | -13,9 | -13,5 |
| 30 | -15,9 | -17,4 | -16 |
| 35 | -19,4 | -22 | -20,5 |
| 40 | -23 | -26 | -24 |

Es zeigt sich, daß die erfindungsgemäßen Systeme gegenüber dem Vergleichssystem eine gleichwertige Gefrierpunktserniedrigung aufweisen, sie besitzen jedoch weiterhin den Vorteil, daß sie korrosionsinhibierend wirken.

## Patentansprüche

1. Verwendung von Polymeren mit wiederkehrenden Succinyleinheiten als Frostschutzmittel, dadurch gekennzeichnet, daß das Polymer wiederkehrende Einheiten wenigstens einer der folgenden Strukturen aufweist

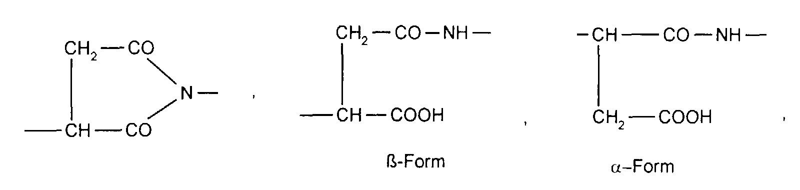

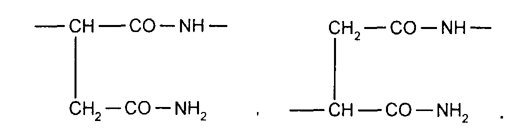

2. Verwendung nach Anspruch 1, dadurch gekennzeichnet, daß als Polymer eine Polyasparaginsäure oder ein Polysuccinimid verwendet wird.

3. Verwendung nach wenigstens einem der vorhergehenden Ansprüche, dadurch gekennzeichnet, daß die Verwendung in einem wäßrigen System stattfindet.

4. Verwendung nach wenigstens einem der vorhergehenden Ansprüche, dadurch gekennzeichnet, daß das Polymer in einer Menge von 1 bis 95 Gew.-% bezogen auf das Gesamtsystem eingesetzt wird.

5. Verwendung nach wenigstens einem der vorhergehenden Ansprüche, dadurch gekennzeichnet, daß das Frostschutzmittel in Kühlwasser für Motoren eingesetzt wird.

6. Frostschutzmittel enthaltend Polymere mit wiederkehrenden Succinyleinheiten, dadurch gekennzeichnet, daß das Polymer wiederkehrende Einheiten wenigstens einer der Strukturen gemäß Anspruch 1 aufweist.

## Claims

1. Use of polymers having repeating succinyl units as antifreezing agents, characterized in that the polymer has repeating units of at least one of the following structures

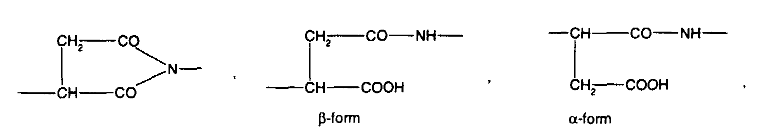

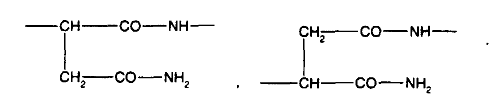

2. Use according to Claim 1, characterized in that a polyaspartic acid or a polysuccinimide is used as polymer.

3. Use according to at least one of the preceding claims, characterized in that the use takes place in an aqueous system.

4. Use according to at least one of the preceding claims, characterized in that the polymer is employed in an amount of from 1 to 95 % by weight based on the overall system.

5. Use according to at least one of the preceding claims, characterized in that the antifreezing agent is employed in cooling water for engines.

6. Antifreezing compositions comprising polymers having repeating succinyl units, characterized in that the polymer has repeating units of at least one of the structures according to Claim 1.

## Revendications

1. Utilisation de polymères à motifs succinyle répétés en tant qu'agents antigel, caractérisée en ce que le polymère contient des motifs répétés possédant au moins une des structures suivantes

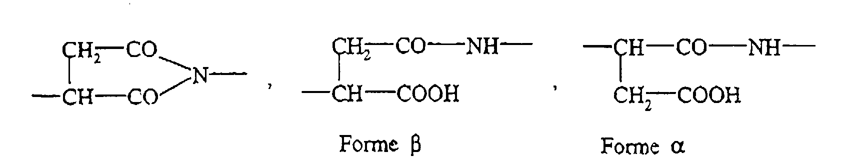

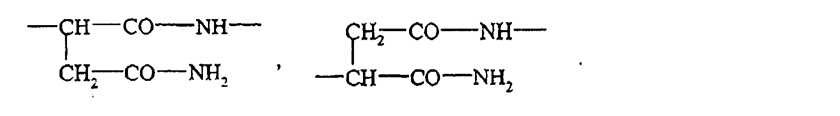

2. Utilisation selon la revendication 1, caractérisée en ce que l'on utilise en tant que polymère un acide polyaspartique ou un polysuccinimide.

3. Utilisation selon au moins une des revendications qui précèdent, caractérisée en ce qu'elle est pratiquée dans un système aqueux.

4. Utilisation selon au moins une des revendications qui précèdent, caractérisée en ce que le polymère est mis en oeuvre en quantité de 1 à 95 % en poids par rapport à la composition totale.

5. Utilisation selon au moins une des revendications qui précédent, caractérisée en ce que l'agent antigel est utilisé dans l'eau de refroidissement de moteurs.

6. Agent antigel contenant des polymères à motifs succinyle répétés, caractérisé en ce que le polymère contient des motifs répétés à au moins une des structures de la revendication 1.
